Europäisches Patentamt

European Patent Office

Office européen des brevets

(11) Publication number: **0 394 980 A2**

# (12) EUROPEAN PATENT APPLICATION

(21) Application number: **90107807.1**

(22) Date of filing: **25.04.90**

(51) Int. Cl.5: **G21B 1/00**

(30) Priority: **27.04.89 JP 108982/89**
**26.05.89 JP 133435/89**

(43) Date of publication of application:
**31.10.90 Bulletin 90/44**

(84) Designated Contracting States:
**DE FR GB**

(71) Applicant: **MATSUSHITA ELECTRIC**
**INDUSTRIAL CO., LTD.**
**1006, Oaza Kadoma**
**Kadoma-shi, Osaka-fu, 571(JP)**

(72) Inventor: **Watanabe, Masanori**
**1-8, 4-chome, Myokenzaka, Katano-shi**
**Osaka-fu(JP)**
Inventor: **Takahashi, Akito**
**29, Shin-ashiya, Suita-shi**
**Osaka-fu(JP)**
Inventor: **Sumita, Kenji**
**3-6, Shinsenri-minami-machi**
**Toyonaka-shi, Osaka-fu(JP)**

(74) Representative: **Eisenführ, Speiser & Strasse**
**Martinistrasse 24**
**D-2800 Bremen 1(DE)**

(54) **Cold nuclear fusion apparatus.**

(57) A cold nuclear fusion apparatus comprises a metal or alloy which can occlude deutrium at a high concentration, means for making the concentration of deuterium occluded in the metal or alloy high, and means for enhancing harmonic oscillation energy of nuclei of deuterium of the metal or alloy by adding external energy, such as discharge energy of deuterium gas, optical irradiation or supersonic energy.

*F i g . 1*

EP 0 394 980 A2

## Cold nuclear fusion apparatus

## BACKGROUND OF THE INVENTION

### FIELD OF THE INVENTION

The present invention relates to a cold nuclear fusion apparatus which can perform nuclear fusion without using very high temperature.

### PRIOR ART

If a nuclear fusion between two deuterium nuclei (D) (hereinafter referred to as D-D nuclear reaction) happens, an enormous energy will be emitted. In order to cause a D-D nuclear reaction, it is necessary to give to a deuterium nucleus an energy enough to come over the Coulomb barrier of the positive charge of a deuterium nucleus. Thus, many processes have been studied such as generating deuterium plasma at an extremely high temperature at an extremely high density to be cofined in a magnetic field, or irradiating deuterium particles by a laser beam of high energy.

Recently, a joint research team of Professor S. Pons of the Utah University of the United States of America and Professor M. J. Fleischmann of the Southampton University of the United Kingdom made public the success of nuclear fusion at room temperature, and this aroused a large response in the world. They announced that when a cathode made of palladium or titanium and an anode made of platinum are immersed in a deuterium electrolytic solution to allow an electric current to flow, an unknown nuclear fusion happens to generate a heat which amounts to four to five times the input of electric power.

After the disclosure, many researchers all over the world have tried to confirm the data. However, the amount of the neutrons generated in the nuclear fusion was far smaller than expected. It is very difficult to understand cold nuclear fusion by using the concepts ever known, and a cold nuclear fusion mechanism has not yet been confirmed.

## SUMMARY OF THE INVENTION

It is, accordingly, an object of the present invention to provide a cold nuclear fusion apparatus which can conduct nuclear fusion stably and efficiently on the basis of a new principle so as to take out energy without using an extremely high temperature.

A first cold nuclear fusion apparatus according to the present invention comprises (a) a metal or alloy which can occlude deutrium at a high concentration, (b) means for making the concentration of deuterium occluded in the metal or alloy high, and (c) means for enhancing harmonic oscillation energy of nuclei of deuterium of the metal or alloy by adding external energy.

Preferably, the external energy given to the deutrium occlusion metal or alloy is the discharge of deuterium gas, optical irradiation or supersonic energy.

Preferably, the metal or alloy which can occlude deuterium contains a Ia or IIa element in the periodic table.

A second cold nuclear fusion apparatus comprises (a) a pair of electrode plates arranged opposite to each other, at least one of the electrodes being made of a metal or alloy which can occlude deuterium,(b) means for filling deuterium gas between the two electrode plates, and (c) means for applying a direct, alternating or pulse electric voltage between the electrode plates to induce gas discharge so as to enhance nuclear fusion reaction.

It is an advantage of the present invention that a nuclear fusion can be conducted stably and effectively by using a simple apparatus to generate a clean energy with a small amount of radiations generated.

Other objects and advantages of the invention will be apparent from the following description, the appending claims and the accompanying drawings, in which:

Fig. 1 is a schematic crosssectional view of a cold fusion apparatus of an embodiment of the present invention,

Fig. 2 is a graph which displays a relation between the harmonic oscillation energy of deuterium nucleus (deuteron) and the probability of the nuclear fusion, and

2

Fig. 3 is a perspective view of an electrode plate which is used in another embodiment of the present invention.

DETAILED DESCRIPTION OF THE PREFERRED EMBODIMENT

Example 1

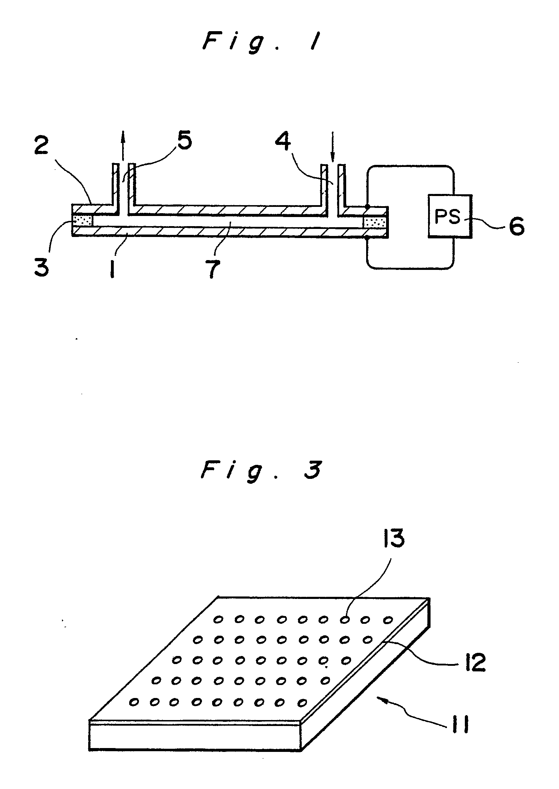

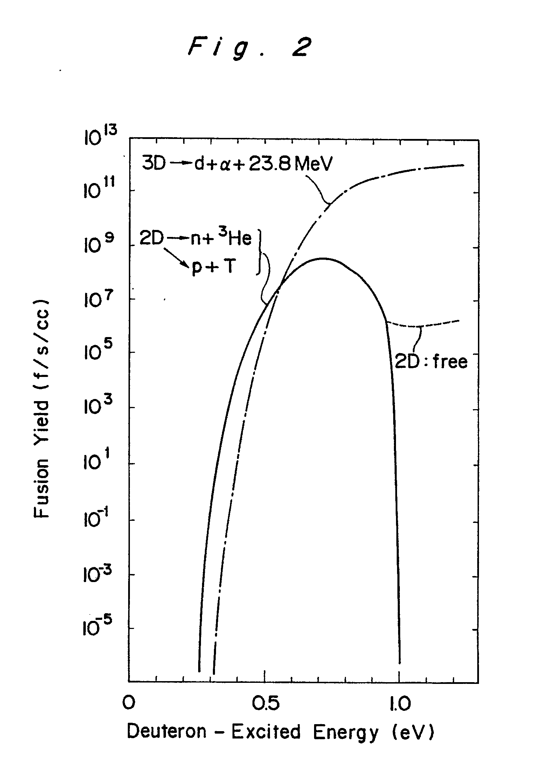

Fig. 1 shows an example of an embodiment of an apparatus for conducting cold nuclear fusion by using discharge of deuterium gas, wherein the numerals 1 and 2 indicate electrodes made of metal capable of occluding deuterium. Both electrode plates 1 and 2 are arranged opposite to each other, kept at a sufficient distance, and deuterium gas is filled in a discharge space 7 between the electrodes 1 and 2. The periphery of both electrodes is sealed by a spacer 3 for preventing the leak of the deuterium gas filled in the space 7. Numerals 4 and 5 indicate an inlet and an outlet of deuterium gas, respectively.

Electrode plates 1 and 2 are made of palladium plates of thickness 0.5 mm, and the distance between them is kept at 0.1 mm. Deuterium gas of one atmospheric pressure is flowed in the space 7 for the palladium electrode plates 1 and 2 to occlude deuterium gas sufficiently. Then, an alternating electric voltage of 200 - 300 V is applied between both electrode plates 1 and 2 with an electric power source (PS) 6 to generate discharge of the gas in the space 7.

When the discharge current is changed from 10 to 100 mA,/cm$^2$, the emission of heat as much as one to three times the background is measured according to the discharge conditions.

If the discharge of deuterium gas takes place between the electrode plates, $D^+$ ions and $D_2^+$ ions of about $10^{17}$ - $10^{18}$ particles/cm$^2$ per second of an average energy from a few eV to a few tens eV collide with the surfaces of the electrodes. We think that those deuterium ions have an effect not only to enhance the concentration of deuterium atoms at the electrode surfaces remarkably, but also to enhance the oscillation energy of the occluded deuterium nuclei to enhance nuclear fusion.

Further, the density and the average energy of deuterium ions which collide with the electrode surfaces can be controlled by the discharge conditions.

The above-mentioned effect can be explained as follows:

A charge of a deuterium nucleus occluded between metallic atoms is shielded by an electronic cloud of surrounding metallic atoms to be decreased effectively (screening effect). If the concentration (about $10^{22}$ particles/cm$^3$ of deuterium nuclei is of about the same order as that of metallic atoms, the tunnel effect is enhanced drastically to cause nuclear fusion to happen easily. Further, a deuterium nucleus occluded between the metallic nuclei, which is thought to conduct harmonic oscillation with a constant energy at room temperature, receives from the external an energy of such as discharge of deuterium gas, optical radiation or supersonic wave, so that the energy of harmonic oscillation of a deuterium nucleus occluded between metallic atoms is increased. Thus, cold nuclear fusion occurs without ultrahigh temperature.

As shown in Fig. 2, the probability of the nuclear fusion according to a theoretical calculation is increased remarkably if a deuterium nucleus (deuteron) has a harmonic oscillation energy between 0.3 and 1.2 eV.

Further, the nuclear fusion is caused by following a cascade nuclear reaction process:

$$(1) \quad D + D \rightarrow {}^4He^{\bullet} \text{ (complex nucleus), and}$$

$$ {}^4He^{\bullet} + D \rightarrow {}^6Li^{\bullet} \begin{cases} \rightarrow {}^4He + D + 23.8 \text{ MeV.} \\ \rightarrow {}^3He + T + 9.5 \text{ MeV.} \end{cases}$$

This process is different from the following nuclear fusion reaction process which has been thought to happen:

$$(2) \quad D + D \begin{cases} \rightarrow {}^3He + n + 3.27 \text{ MeV } ( \sim 50 \text{ \%}) \\ \rightarrow T + p + 4.03 \text{ MeV } ( \sim 50 \text{ \%}). \end{cases}$$

In other words, in the former reaction (1), two deuterium atoms (D and D) conduct a nuclear fusion reaction first to form a complex nucleus $^4He^\bullet$; In succession to this reaction, the $^4He^\bullet$ and another deuterium atom D around the former reacts to form a complex nucleus $^6Li^\bullet$; Next, the $^6Li^\bullet$ desociates to a $^4He$ and a deuterium atom (D) and to a $^3He$ and a tritium atom (T) by emitting an energy of 23.8 MeV and 9.5 MeV, in parallel. The generated energy is only given to charged particles $^4He^{++}$ and $D^+$ or $^3He^{++}$ and $T^+$ to be transformed into heat in the metal. Therefore, the amount of the radiations generated is about one millionth that of the prior D-D nuclear reaction (2), so that it is an advantage that a clean energy can be generated.

In the embodiment mentioned above, when the discharge of the deuterium gas happens between both electrode plates, the concentration of deuterium atoms at the surface of the electrode plates is increased remarkably due to the irradiation of deuterium ions. Further, if palladium metal is used for the electrode plates, though the depth of a potential in the crystal lattice of metallic palladium is 0.6 eV, the oscillation energy of an occluded deuterium nucleus is increased up to 0.3 - 1.2 eV. Thus, we think that the nuclear reaction (1) becomes possible.

The depth $\phi$ of the potential in a crystal lattice differs with metals. It is preferable in order to increase the efficiency of the reaction to enhance the harmonic oscillation energy up to $0.5\ \phi - 2\ \phi$.

As to the cold fusion apparatus according to this invention, any deutrium occlusion metal which can occlude deuterium nuclei at a dense concentration (of about the same order as that of the metallic atoms), such as titanium or an alloy of such a metal as well as palladium can be used.

On the other hand, it is desirable to discharge deutrium gas at an electric voltage as low as possible in order to increase the energy efficiency. Paschen's rule on the spark voltage can be utilized on the distanced between the electrodes and the gas pressure P. The apparatus is preferably designed for the discharge of deuterium gas so that the product of P and d is in a range between 5 and 50 Torr·cm. Preferably, the pressure P is in a range between 0.5 and several atmospheric pressure, and the distance d between the electrodes is in a range between 0.005 and 0.1 cm for deuterium gas. On the gas discharge of deuterium gas, alternating current discharge, direct current discharge and pulse current discharge have an effect similar to each other. However, in case of direct current discharge and pulse current discharge, it is necessary that at least the cathode is made of a metal which can occlude deuterium gas of a large amount.

## Example 2

Fig. 3 shows a modified example of a structure of electrode plate. A titanium electrode plate 11 is oxidized to form a titanium oxide film (electrically insulating film) 12 of thickness 0.3 μm at a surface, and many minute pores 13 of diameter about 30 μm are formed in the titanium oxide film 12.

When the above-mentioned cold fusion is conducted by using the electrode plate shown in Fig. 3, it is observed that the exothermic efficiency of the nuclear reaction was improved further.

We consider that the above-mentioned screening effect is enhanced because the discharge current concentrates at the minute pores 13 in the titanium oxide film 12 so as for an electric current at a high density to flow locally.

In the embodiments mentioned above, discharge plasma is used as means for giving an external energy to the metal to increase and control the harmonic oscillation energy of deuterium atoms in the metal. Further, other energy such as optical energy, supersonic energy, electronic beam energy can be used instead of discharge plasma energy.

## Example 3

In a modified embodiment, a palladium plate doped by a high concentration of lithium of thickness 0.5 mm is used for the electrode plate 1, while a nickel plate is used for the electrode 2 in the cold fusion apparatus shown in Fig. 1. The other parts of the apparatus is the same as in the above-mentioned example shown in Fig. 1.

Then, an experiment on cold fusion on the same conditions as those of the above-mentioned example 1 is performed, and it is found that heat as much as one to five times the input energy is generated according to discharge conditions.

In this example, as in the above-mentioned example 1, the discharge of deuterium gas has effects of increasing the concentration of deuterium atoms at the surface of electrode remarkably and of enhancing the vibration energy of deuterium nucleus occluded in the metal.

A lithium atom has a small value of the electronegativity, and a deuterium atom occluded around a lithium atom becomes a $D^-$ ion of $1s^2$ structure of helium. Thus, the effect of screening a positive charge of a deuterium nucleus effectively becomes large around a lithium atom doped in palladium, so that the probability of nuclear fusion reaction becomes large.

Further, the potential around a lithium atom which enters into the palladium crystal lattice becomes shallower than that of a palladium atom. This has a similar effect to that of increasing effectively the vibration energy of deuterium atoms around a lithium atom, so that a nuclear fusion reaction is believed to be accelerated.

In a cold fusion apparatus according to this invention, a deutrium occlusion metal or alloy doped with an alkaline metal other than lithium or with an alkaline earth metal of IIa group of the periodic table, which can occlude deuterium at a dense concentration, has a similar effect to that doped with lithium.

For example, magnesium of thickness 1 μm is deposited in vacuum on a nickel plate and then it is heated immediately at about 350 °C in deuteron gas so as to form magnesium deuteride at the surface. When such a plate is used as the electrodes 1, 2 of an apparatus shwon in Fig. 1 and the discharge is conducted in the conditions explained in Example 1, a cold nuclear fusion reaction is found to happen as in Example 3. Magnesium deuteride includes deuterium largely as much as 15 %, and deuterium atoms exist as $D^-$ ions. Thus, it is thought that the screening effect is so large as to be preferable for cold fusion.

It is understood that various other modifications will be apparent to and can be readily made by those skilled in the art without departing from the scope and spirit of the present invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which the present invention pertains.

## Claims

1. A cold nuclear fusion apparatus, comprising:
a metal or alloy which can occlude deutrium at a high concentration,
means for making the concentration of deuterium occluded in the metal or alloy high, and
means for enhancing harmonic oscillation energy of nuclei of deuterium of the metal or alloy by adding external energy.

2. A cold nuclear fusion apparatus according to claim 1, wherein said means for enhancing harmonic oscillation energy of deutrium nuclei is means for irradiating said metal or alloy with charged particles.

3. A cold nuclear fusion apparatus according to claim 1, wherein said means for enhancing harmonic oscillation energy of nuclei of deuterium is means for irradiating said metal or alloy with optical energy.

4. A cold nuclear fusion apparatus according to claim 1, wherein said means for enhancing harmonic oscillation energy of nuclei of deuterium is means for giving supersonic energy to said metal or alloy.

5. A cold nuclear fusion apparatus according to claim 1, wherein said metal or alloy which can occlude deuterium contains a Ia or IIa element in the periodic table.

6. A cold nuclear fusion apparatus according to claim 5, wherein said metal or alloy contains lithium.

7. A cold nuclear fusion apparatus according to claim 5, wherein said metal or alloy contains magnesium.

8. A cold nuclear fusion apparatus, comprising:
a pair of electrode plates arranged opposite to each other, at least one of the electrodes being made of a metal or alloy which can occlude deuterium,
means for filling deuterium gas between the two electrode plates, and
means for applying a direct, alternating or pulse electric voltage between the electrode plates to induce gas discharge so as to enhance nuclear fusion reaction.

9. A cold nuclear fusion apparatus according to claim 8, wherein said electrode plate which can occlude deuterium has a part having a high electronic density or electric current locally.

10. A cold nuclear fusion apparatus according to claim 8, wherein said electrode plate which can occlude deuterium is coated by an electrically insulating material whose surface has many minute holes.

5

Fig. 1

Fig. 3

Fig. 2